Europäisches Patentamt

European Patent Office

Office européen des brevets

(11) Publication number: **0 420 509 A1**

## EUROPEAN PATENT APPLICATION

(21) Application number: 90310320.8

(22) Date of filing: 20.09.90

(51) Int. Cl.⁵: **A23F 5/38, A23P 1/02**

(30) Priority: 28.09.89 US 414548

(43) Date of publication of application:
**03.04.91 Bulletin 91/14**

(84) Designated Contracting States:
**AT BE CH DE DK ES FR GB GR IT LI LU NL SE**

(71) Applicant: KRAFT GENERAL FOODS, INC.
**250 North Street**
**White Plains New York 10625(US)**

(72) Inventor: **Arora, Vijay Kumar**
**9 Stone Hollow Road**
**Montvale, New Jersey 07645(US)**
Inventor: **Vitti, Rudolf Anthony**
**54 Spring Drive**
**Dumont, New Jersey 07628(US)**
Inventor: **Powhida, Christopher**
**10 Willow Street**
**Castleton, New York 12033(US)**

(74) Representative: **Eyles, Christopher Thomas et al**
**W.P. THOMPSON & CO. High Holborn House**
**52-54 High Holborn**
**London WC1V 6RY(GB)**

(54) **Agglomeration process and apparatus therefor.**

(57) The invention relates to a process and apparatus to agglomerate soluble coffee particles. The process comprises feeding a curtain of soluble coffee particles to an agglomerator. The curtain falls between a pair of steam distributors (66, 68) which spray steam which intersects the particles causing wetting and fusion of coffee particles to form agglomerates. The moist agglomerates pass through a tempering zone where they are partially surface dried by a draft of laminar air of a temperature less than 200° F (93.3° C) which moves downward with the agglomerates. The agglomerates are collected on a moving continuous belt (48), transferred to a drier and are subsequently dried to a moisture content of 5% or less. A process is also disclosed for darkening a light-colour, granular soluble coffee product.

FIG. 1

# AGGLOMERATION PROCESS AND APPARATUS THEREFOR

## TECHNICAL FIELD

The present invention relates to a process to effect the agglomeration of particulate comestibles, most notably soluble or instant coffee and an apparatus to effect such agglomeration.

## BACKGROUND ART

Agglomeration of particulate comestibles, particularly soluble coffee powder, has been practiced in the food industry to improve the reconstitution properties of the powder (solubility), to increase the particle size to heighten consumer appeal of the product and to adjust the density of the treated product, among other reasons. Typically, when soluble coffee particles are agglomerated they are contacted with a vigorous, turbulent jet of steam. As the steam condenses, the surfaces of the particles become wet and sticky. In the turbulent steam zone these sticky particles collide and adhere to one another. Thereafter, upon drying the welds between particles solidify to produce agglomerates.

Spray drying towers have been employed to effect agglomeration. The spray-dried soluble coffee particles would be sprayed laterally into a tower where they would be contacted with a steam spray and then descend to a point of collection at the tower bottom. The agglomerates produced had a quite random particle size distribution, whereas, in addition to agglomerates, a high percent of fines were recovered, typically 35-75% of the feed material. A need still existed for an agglomerating means which would collect a narrower particle size distribution of agglomerate and/or a discharge having a lower percent of fines. To explain, a need existed for an agglomerator specifically designed and engineered for soluble coffee and like dried extracts. The agglomerator should allow independent operations in the humidification/steaming and drying to produce darker, harder agglomerated products while minimizing recycle and thereby improving volatiles retention.

U.S. Patent No. 2,977,203, issued to B. Sienkiewicz et al., teaches the traditional agglomeration of soluble coffee particles previously described. More recently, workers have attempted to modify the agglomeration process to produce agglomerates possessing a roasted and ground appearance. U.S. Patent Nos. 4,594,256, 4,594,257 and 4,594,258 have set forth a number of different processes to achieve this end. Hsu, in U.S. Patents No. 4,640,839, and 4,724,620 disclose a process and apparatus to agglomerate soluble coffee wherein coffee particles in a vertical path contact an aqueous gas which travels horizontally inward. The gas confines the soluble coffee particles under relatively quiescent conditions to moisten and fuse the particles together. Thereafter, the moistened and fused particles are dried. This process is said to be able to produce agglomerates possessing a roast and ground appearance as well as being able to darken light-colored freeze-dried coffee.

## DISCLOSURE OF THE INVENTION

A process has now been developed which is ideally suited to the agglomeration of discrete particles of subdivided soluble coffee powder and other powders of use. The soluble coffee particles are discharged to the top of an elongated chamber, wherefrom a curtain of the dry particles is contacted by steam from a pair of steam distributors which are spaced from one another to produce a fine spray of steam which intersects the particles. Thereafter, the particles under a draft of laminar air are passed downwardly to partially dry the surface of the agglomerates and, finally, the agglomerates fall on a belt and proceed to a drier to produce a final agglomerate of 5% or less moisture.

The agglomeration begins as a straight curtain of powder enters the agglomeration chamber between two diverging steam distributors whose spray of steam converge on the falling curtain. A slight negative pressure in the order of less than 0.040 inches (in.) of water (10 Pa), and ideally in the order of less than 0.015 inches of water (3.7 Pa), is created at the point of entry of the curtain of subdivided particles to the agglomerator to contain the steam within the agglomeration chamber. Thus, a slight negative pressure is created relative to the atmosphere around the point of descent of the particles to the agglomerating zone. After the agglomerates leave the agglomeration zone, the moistened agglomerates spread unconfined to a reduced population density having a minimized inter-agglomerate collision. The curtain of falling agglomerates then pass freely to a tempering zone wherein at least the surfaces of the agglomerates are partially dried by a co-current, downward draft of laminar drying air, preferably at a temperature less than 200°F (93.3°C). During agglomeration the powder has undergone a moisture increase of at least 50% to as high 400% from the initial particle moisture, the wet agglomerates are at about 6-8% moisture.

The moist agglomerates free-fall and are collected on a straight surface of a conveyor. Generally, the agglomerates particles collect commonly in a bed, one or two agglomerates thick, and even thicker when a coarse agglomerate is desired this being controllable by varying the belt conveyor speed. The agglomerates are eventually dried to a moisture content of 5% or less, typically such drying reduces the moisture content at least 50% and, more commonly, to a final moisture content of 3.0 to 4.5%.

The present invention also discloses an apparatus for agglomerating soluble coffee particles which comprises means for feeding a thin curtain of soluble coffee powder downwardly as a free-falling, thin curtain. Means are provided for agglomerating the thin curtain which comprises a pair of steam distributors, each having a plurality of distinct steam holes therein acting in a downward and inward opposing direction, one plate to another. A tempering zone is located beneath the agglomerating zone and is adapted to cause air to flow laminarly downward around the moistened agglomerates. A horizontal conveyor is located at the bottom of the tempering zone and is adapted to collect the moist agglomerates and transfer them to a separate drying zone wherein they may be dried in a fluidized bed or other dryer to a stable moisture content.

The foregoing apparatus is provided with means located at the upper extremity of the agglomerator that creates a slight negative pressure, say below 0.04 inches of water(10 pa)relative to the point of descent of the powder into the agglomerating zone.

The discrete steam holes are disposed as patterns thereof. These holes are adapted to spray steam inwardly at acute angles to the horizontal, the steam holes being commonly less than 1/8 of an inch (3.2 mm) and preferably less than 1/16 of an inch (1.6 mm) and being in aligned and spaced rows. Means are provided whereby the downwardly flowing laminar air cooperates with intermediate lower temperature air that contacts the downwardly circulating air whereby the product may descend gradually and be surface-dried. The agglomerates are collected on a horizontal conveyor and are transferred to a separate drying zone.

The invention has wide application and may be employed for producing dried agglomerates of spray-dried and freeze-dried coffee powder and other comestibles, such as dry dairy products like mild and cream, and dried citrus fruit juice such as orange and like juices, may be advantageously agglomerated.

The invention will thus be seen to comprise the wetting and fusion of coffee powder in a turbulent steaming zone, tempering the wetted agglomerates with warm laminer air flow, whereafter the eventual drying of the agglomerates takes place in a separate step of the process. Separate steaming and drying sections permit optimization of both independent phases of agglomeration which is not practiced in conventional agglomeration operations. The laminar flow of air in the tempering zone will generally be at a temperature less than 200° F (93.3° C) and commonly in excess of 125° F (51.7° C), more commonly 140-175° F (60-79.4° C). This exposure to heat is much less severe than in many prior art processes, thereby causing less flavor and aroma loss.

The plurality of discrete steam openings in the steam distributors have openings at 1/8″ (3.2 mm) or less, ideally 1/16″ (1.6 mm) or less. Two opposed steam distributors are at an angle of up to 30° from the vertical, and typically in the order of 15° from the vertical for each steam distributor.

The steam distributors are designed to provide flexibility in the zones for expansion of the steam around the location, amount and residence time in the steam zone. In some cases, the steam enters the agglomerating zone immediately at the top of the steam distributors in a manner which primarily surface wets the agglomerate, without penetration of moisture into the core. On the other hand, modifications may be practiced wherein the openings in steam distributors are located at a lower section from the point of entry of the particles into the steaming section of the design so as to cause wetting of the interior of the agglomerate to varying extents and produce a random agglomerate form.

In one embodiment, the process will produce an agglomerated instant-coffee product having a roasted and ground appearance and wherein a minimum of fines constituting generally much less than 50%, preferably from 20% to 40%, by weight of the agglomerated instant coffee is produced. Thus, as in the case of the aforesaid Zemelman, et. al., LeBlanc, et. al. and Vitti, et. al. patents, U.S. Patent Nos. 4,594,256, 4,594,257 and 4,594,258, an agglomerated instant coffee product is produced by employing the steps of milling the spray-dried coffee to produce a milled powder of an average particle size of 25 to 75 microns, optionally adding an oil, such as expressed coffee oil, to the powder or adding roast and ground colloidal particles to the powder so that such additive will bind together with slight compaction, forming a regularly shaped, loosely bound, structurally intact cluster from the powder, and fusing at least the outer surface of the cluster and leaving the interior filled with dry powder. The present invention represents the advance in the art of effecting such fusion and agglomeration and subsequently drying the agglomerates.

## BRIEF DESCRIPTION OF THE DRAWINGS

Detailed description of the process will render it more apparent in terms of the coffee embodiments discussed hereinafter in connection with the accompanying figures, wherein

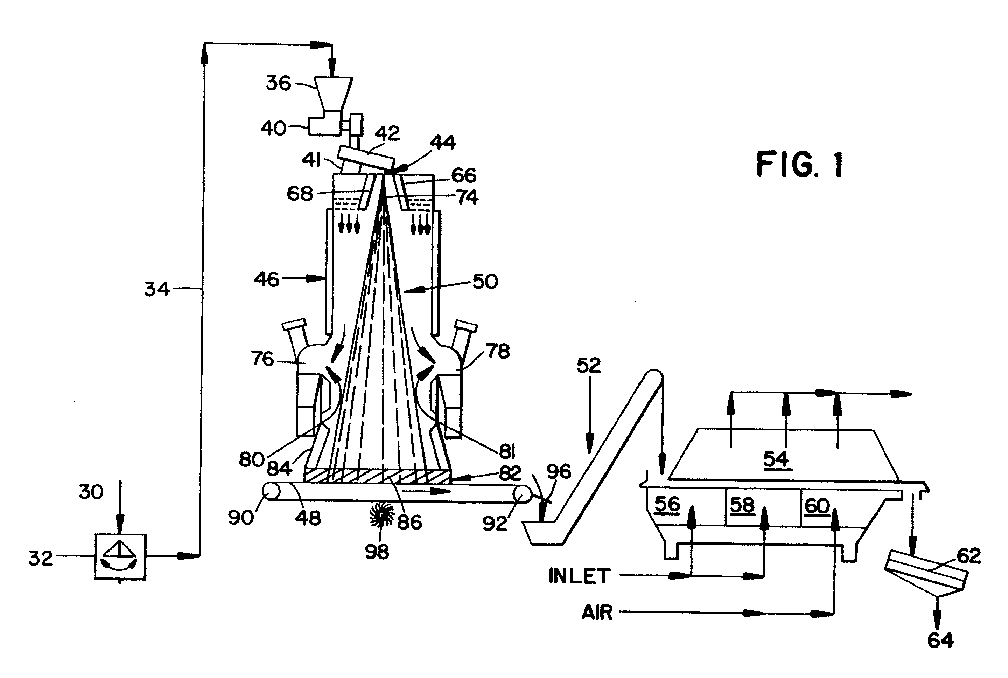

Figure 1 is a side elevation of the agglomerating apparatus and of the drying system;

Figure 2 is a top view of the agglomerator showing the plenum air inlets and agglomerator inlet port of the apparatus of Figure 1;

Figure 3 is a front elevation of one of the plenum air inlets;

Figure 4 is a front cross-section of the top portion of the agglomerator showing in greater detail plenum air distributors with the steam distributors removed;

Figure 5 is a side elevation of one of the pair of steam distributors of use in the present invention; and

Figure 6 is a view of the steam manifold of the distributor with parts broken away to show the manifold configuration.


BEST MODE FOR CARRYING OUT THE INVENTION

Referring to the figures, spray-dried coffee, typically particles of a spray-dried extract are advanced at 30 to a Fitzmill grinder 32 equipped with knife or hammer blade means which serve to break-up the spray-dried material into fractured particles. The subdivided soluble coffee particles are fed through line 34 to a hopper 36.

A hopper 36 is mounted above a rotary feeder 40. From feeder 40 the material enters chute 42 whereon it is deposited and wherefrom it passes into the agglomeration zone 74 through agglomerator inlet port 44. Optionally a feed funnel (not shown) can be inserted between the chute and the agglomeration zone in order to direct the powder curtain. As will be discussed hereinafter, chute 42 may be either motionless or vibrating depending upon the shape of particle ultimately intended.

From the discharge of chute 42, the material is charged to an agglomerator, broadly identified as 46, and advances downwardly onto a long, horizontal belt conveyor 48. Depending upon the agglomerate to be formed, numerous combinations may be practiced, but generally the descending spray of fine, discrete instant-coffee particles descends downwardly and is moistened. Thereafter, the action of laminar air-flows generally at 50 surface, dry the particles and prevent further expansion of the curtain.

The moist agglomerate is collected on conveyor belt 48, material being discharged to moist agglomerate transfer means 52 that carries the moist agglomerate which is eventually dried in the fluidized bed dryer at 54. Optionally, the moist agglomerate from conveyor belt 48 may be deposited directly to fluidized bed dryer 54. In the fluidized bed dryer 54, the particle-charge is deposited in a first-drying section 56, whereon the coffee particles commence their eventual drying; drying being continued in a second section as at 58 and eventually being finish dried under the influence of fluidized cooling air at 60. The dried agglomerates are discharged from dryer 54 onto a Sweco circular screen 62 and eventually are collected as product at 64.

The subdivided spray-dried coffee powder entering the agglomerator port 44 has a moisture content typically of 2.0%, although higher moisture percentages may be practiced when adding fines and milled overs. The agglomerate formed is collected at 6-8% moisture at the point of discharge from the long belt conveyor 48. Final product is recovered eventually at a moisture content of 5% or less, and typically 3-4½%, at screener 62 and product hopper 64 to achieve dark color and a discrete agglomerate form.

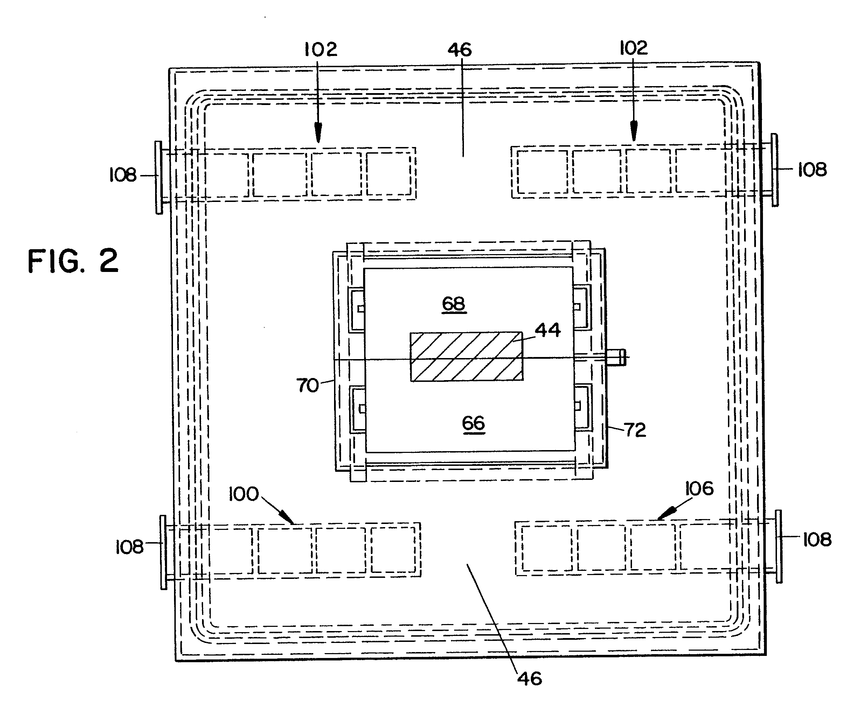

A distinctive part of the present process involves the use of steam distributors generally shown as 66 and 68 located at the top of agglomerator 46 and adapted to cooperate with confining walls 70 and 72 (Figure 2) to define a steaming chamber 74. Steam distributors are detailed hereinafter but, in any event, descends approximately 16-18 inches (406-457 mm) downwardly into the agglomerator 46 and are angled as shown typically at 15° from the vertical. Vertical confining walls 70 and 72 confine the discharge of the steam distributors 66 and 68 in a steaming zone.

Around the pattern of descent of agglomerates are means which assure the charging of warm temperature air, broadly below 200°F (93.3°C), descends downwardly with the wet agglomerates formed in chamber 74. A field of inlet air is eventually collected and ducted downwardly and outwardly as at 76, 78, exhausts being located approximately 1/3 of the agglomerator height from the base thereof. Air break means 80 and 81 generally are located beneath the exhaust, approximately 1/6 above the bottom of the agglomerator and surround the agglomerator, the air break being caused to circulate air up to and through the exhaust means 76, 78. Excess steam that may be present at the terminal section of the agglomerator is circulated upwardly by the air admitted through air breaks 80, 81 and outwardly whereby the lowermost zone of the agglomerator generally designated as 82 has virtually no steam vapor and is provided with moistened agglomerates adapted to descend and eventually deposit upon long horizontal belt conveyor 48.

To prevent moist agglomerates from contacting the agglomerator sidewalls, it is desired that the lower extremity of the agglomerator is tapered outwardly as shown at 84, typically also at 15° (the sides parallel to the steam distributors), from the vertical. Tapered section 84 eventually communicates with a flexible skirt, shown at 86, that maintains the agglomerate charge free of air-influx to belt 48, while at the same time allowing the charge to be advanced. Thus, tapered section 84 has an outward and downward location relative to the agglomerates descending. This allows further expansion of the agglomerate charge without contact of the agglomerator walls. Plates 66 and 68 are essentially parallel to wall members 84 in assuring descent of the particles with minimal or no contact of the agglomerator wall per se.

As a rule, the agglomerate charge on the belt means 48 is deposited thereon at a depth no greater than a half of an inch (12.7 mm), ideally as a single layer, although it is to be recognized that in less preferred embodiments a deeper layer may be employed to like advantage. The agglomerates discharged to the conveyor belt 48 retain their identity as such when run as a single layer. Thus, as the moist agglomerates proceed in a single layer along conveyor belt 48 at the aforestated moisture content of 6-8%, the vast majority thereof are in limited contact with one another. In the less preferred embodiment where a coarser agglomerate is desired, the belt speed is decreased to obtain multiple layers of agglomerates which will fuse together to form larger aggregates.

The conveyor belt 48 comprises rollers 90, 92 and the belt itself 48 of white neoprene rubber. A blade 96 scrapes the belt clean of agglomerates and is further equipped with a rotating brush 98 that scrapes the belt clean of any coffee fines, whereupon the belt continues endlessly once again to receive successive agglomerate charges.

It should be noted at this point that there is a minimal entry of surrounding atmospheric air entering into the lowermost zone 82 of the agglomerating chamber beneath the flexible skirt 86. This air helps to remove excess steam and/or moisture in this area.

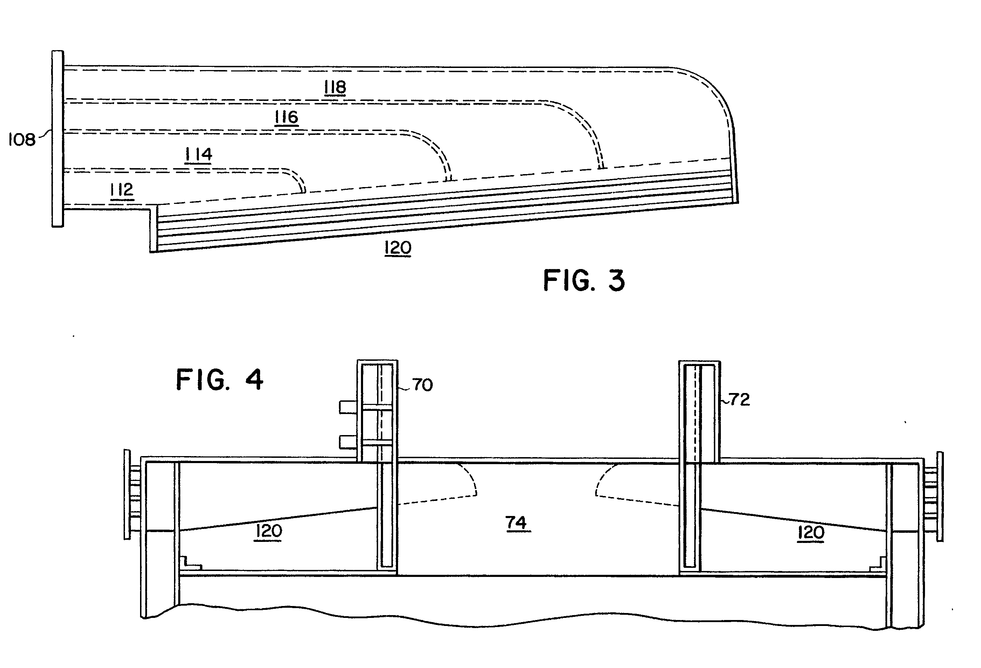

As indicated previously, tempering occurs at a relatively low temperature and ideally above 140° F (60° C) inlet air, although typically as high as 175° F (79.4° C) and higher can be employed. This warm air is blown into the top of the agglomerator through four air distributors 100, 102, 104 and 106 (shown in Figure 2). Air enters each distributor at 108 and courses through the air distributors where it is subdivided respectively into channels of expanding dimension 112, 114, 116, 118 (shown in Figure 3) that thereafter feed the charge of warm air downwardly as at 120 found the steaming chamber 74 of agglomerator 46. The four air distributors thus shown enter the agglomerator 46 and 68 that surrounds steaming zone 74 wherein steam distributor 66 and the end walls 70, 72 are located.

In the present process, agglomeration is affected in a relatively turbulent manner by passing discrete particles of subdivided dry feed having a moisture content less than 3%. The convergent steam sprays emanating from 66, 68 intersect with a thin stream of discrete particles that descent into the agglomerator.

The steam sprays are established by a plurality of discrete holes in the steam distributors adapted to issue the steam therethrough; each of the steam sprays intersect the curtain of powder as it descends in agglomeration zone 74. The steam is generated uniformly and to an extent which at least doubles the moisture content of the product passing the steam sprays causing the agglomeration.

The steaming zones are formed by rows of downwardly and inwardly poised, discrete sprays of steam which intersect with the downward plane of the curtain of product, each steam spray being poised to intersect the downward descent of particles as they are wetted to form agglomerate clusters. The tiny holes, are generally less than 1/8" of an inch (3.2 mm) and typically 1/16 of an inch (1.6 mm), the holes being arranged in order uniformly along the length of each plate. Each of the plates of surfaces 66, 68 are poised at the same angle to the vertical, whereby the agglomerates formed are uniformly wetted with steam.

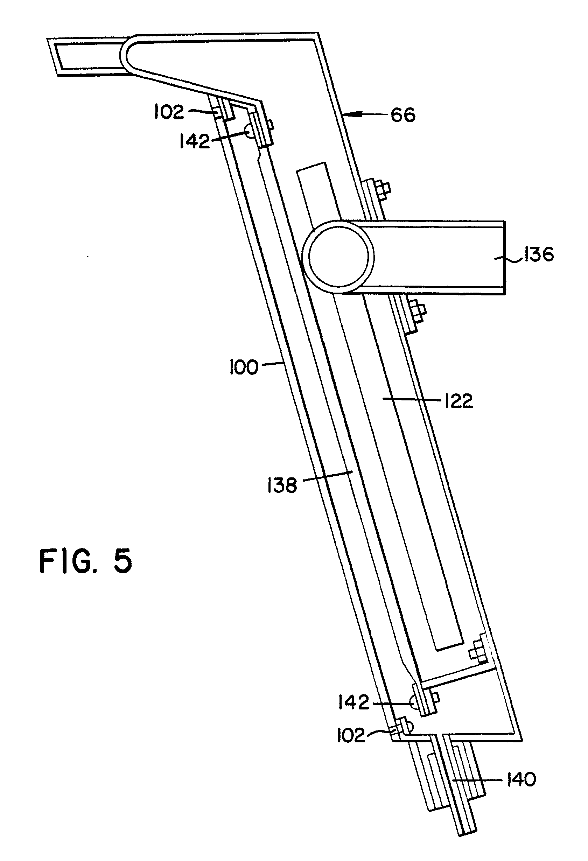

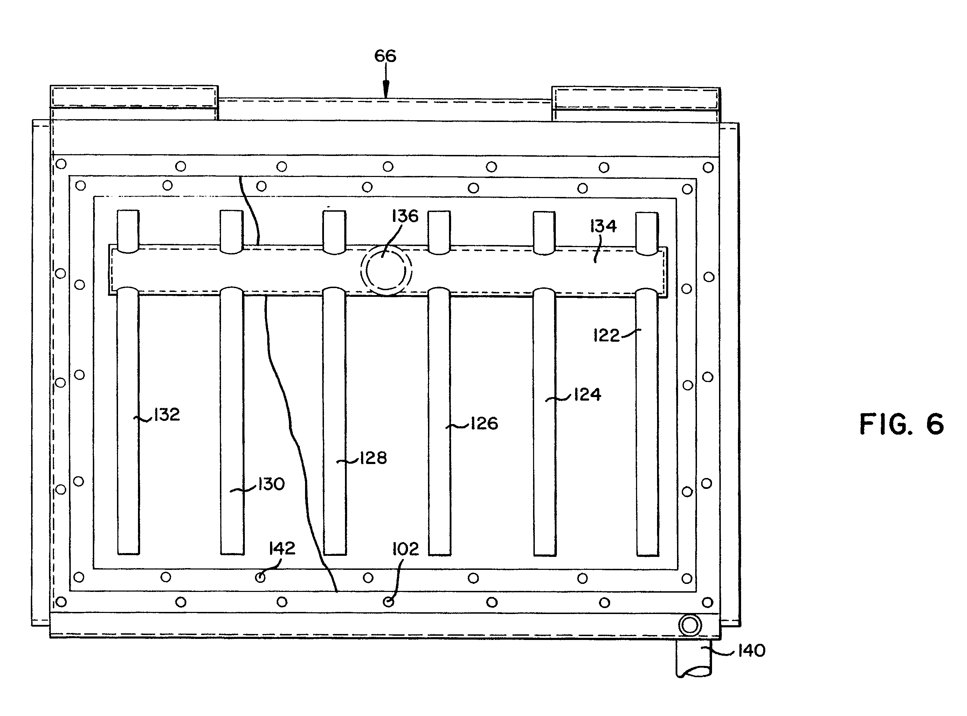

Referring to Figs. 5 and 6, a steam distributor 66 is shown. In Fig. 5 perforated face plate 100 and mesh screen 138 are shown with holding screw 102 on the face plate 100 and holding screens 142 on mesh screen 138. In Fig. 6 the mesh screen 138 and the perforated face plate 100 are not shown. Steam distributor 66 is shown with a steam manifold 134 having six pipe legs 122, 124, 126, 128, 130 and 132. Entrance steam pipe 136 is shown feeding manifold 134. The steam holes exiting the six pipes 122, 124, 126, 128, 130 and 132 are not shown (as they face the back of the distributor housing) but approximately 9 holes per pipe leg, having an opening of 3/32 inch (2.4 mm), are used to provide uniform velocity across the distributor. Condensate drain line 140 is also shown. The above structive for steam distributor 66 is repeated for a similar distributor 68.

It is a feature of the present process that a plurality of the aforementioned small holes, which holes may be in the neighborhood of 1,000 or more, depending upon lateral size of the agglomerator may be employed; the holes being variously located for various product curtain characteristics. In one embodiment, strips of small holes mau be located immediately adjacent to the entry to the upper portion of the agglomerating zone 74.

In such an embodiment for the production of soluble coffee having a roast and ground appearance, the surface of the agglomerate principally is wetted, leaving the interior relatively dry.

In other embodiments, the small holes arranged in lines that are preferably alternating are located in the lower 50% of the respective faces of perforated plates 66, 68; such an embodiment will cause individual particles of powder to become more wetted and fused together to form larger, random agglomerates.

Indeed, the process also contemplates strips of tiny holes in the central 1/3 of the perforated plates. This allows the coffee particles to descend prior to contact with the steam. This contact will result in less initial steam contact to darken an already-formed agglomerate or darken a freeze-dried product as desired.

The wet agglomerates continue downwardly between distributors 66 and 68 and come into contact with warm, temperature drying air moving laminarly downward in the agglomerator 46, the drying air temperature being introduced to the agglomerator at a temperature commonly less than 200°F (93.3°C) but greater than 125°F (51.7°C), commonly 140 to 175°F (60 to 79.4°C). The warm temperature air will pass downwardly through the agglomerator a substantial distance, whereupon it intermixes with an updraft of a still lower at room temperature air from the air break 80 and 81, commonly air at room temperature of about 68°F (20°C). Thus, at the lower extremity of the tempering zone, the warm air, mixed with the updrafted air, moves outwardly away from the descending agglomerates which collect as a bed thereof downstream of the air exhaust as a curtain of discrete particles.

Means are provided for drying the moist agglomerates thus collected to remove at least 50% of the moisture thereof, preferably in fluidized bed dryer 54, and collect same at a moisture content less than 5%, commonly in the case of soluble coffee at 3-4.5%.

The agglomerator wall is intended to serve the distinct function of essentially containing laminar flow therewithin from the plenum section at the upper extremity of the agglomerator and continuing downwardly to the exhaust ducts 76, 78. The flow that occurs in the tempering zone of the device is entirely laminar flow, i.e., having a Reynolds Number value much less than 2300. It may be granted that the chamber volume intermediate steam distributors 66, 68 and in the vicinity of 74 is turbulent by reason of the downward spray of inlet powder and the angle at which the steam is introduced. However, as the particles intermingle with the steam spray they descend downwardly and outwardly as shown, whereupon they are contacted by the downwardly laminarily flowing air which contacts and surface dries the particles in the tempering zone.

Thus, in an agglomerator unit of a size about 5ft.(1.52 square, the plenum directs the warm air downwardly around the rectangular outline of the agglomeration zone 74 wherein the steam and particles collide to effect initial agglomeration. The inlet plenum air which courses downwardly at typically 1000c.f.m. (471947 cm³/sec) and as high as 2000 c.f.m. (943895 cm³/sec), intercepts the agglomerates formed; the feed rate of the coffee powder being 300 pounds per hour (3266 kg/day).

Within the laminar flow pattern that exists, the tempering continues as the particles continue their downward and gradual outward descent until they typically have been at least surface dried.

The inlet port created by the distributors 66, 68 is maintained at a slight negative pressure of 0.010 to 0.040 in. of water (2.49 to 10 Pa). Such negative pressure keeps the agglomerating steam in the chamber 74. The slight negative pressure is maintained by controlling the plenum air. A balance is maintained between the inlet plenum air and the exhaust of air, a variable speed fan (not shown) being employed to regulate the plenum flow. The fan means comprise an exhaust fan communicating through exhaust ducts to cyclones which are in line to collect dust particles escaping the agglomerator. The ducts merge and then communicate with exhaust fan. By adjusting the speed of the plenum fan, the slight negative pressure, aforesaid, is maintained to assure that the agglomerates fall in a more consistent pattern.

With continued downward flow of moist agglomerates, the agglomerates thereof usually experience a slight dehydration, commonly less than 0.5%, generally referred to as surface-drying. The continued fall of the agglomerates eventually collect on belt 48. The outward slant of skirt 84 assures an uninterrupted migration of agglomerate particles downwardly for deposit on belt 48.

Referring to distributors 66, 68, the steam will generally issue as two rolling intersecting patterns. This turbulence all occurs substantially within the chamber 74, whereafter the wetted agglomerates proceed downwardly and outwardly under the control of the drying actions of the laminarly descending air.

When a random, honeycomb agglomerate is desired, face plates 66, 68 having the discrete perforated holes on the lower sections thereof are used. Some flaring of the powder charge prior to primary steam contact at about 6 p.s.i. (142kPa is desired which produces a more random agglomerate form. The flow pattern of the particles is such that the steam flow allows the particles to widen somewhat as they descend. The majority of the steam jets are generally in the lower half of the face of each distributor, it being understood that some minority of the jets may be located above the midpoint. Such a product is achieved commonly without agitation of the coffee powder entering the agglomerator, i.e., the vibrator 42 is not employed. A spray-dried feed, before milling customarily within the 75-120 microns average particle size, will be ground to a particle size of from 20-70 microns with a standard deviation of 35-75%.According to the present invention, it is also possible to produce an agglomerated instant coffee product possessing an appearance much like roasted and ground coffee. A very cohesive powder is sought and oil may be plated on the surface of the spray-dried powder prior to milling. Alternately, colloidal roast and ground coffee may be mixed with the soluble coffee to increase the cohesive nature of the powder. The milled powder will be vibrated to effect a displacement of say about0.2" (5.1 mm) at 60 cycles per second of vibration. The coffee charge to tray 42 will cluster, due to vibration of the vibrator 41, thereafter feeding a vibrating screen and the discharge having a distinct shape, i. e., a charge passing through to a 6 to 8 mesh U.S. Standard Sieve screen (3.35 to 2.36 mm). The resulting dried agglomerate particles have distinct cube-type shapes.

To assure the clusters remain intact, they are contacted by steam at 6 p.s.i. (41.37 kPa) through face plate holes near the top half of each distributor, resulting in intersecting steam sprays that directly contact the descending clusters and produce wetted exteriors on the faces thereof. The agglomerated cluster will be a size ranging from a 6 mesh to say 10 mesh (3.35 to 2.00 mm), 8 mesh (2.36 mm) being preferred, and will have a fines percent less than 35% and commonly less than 25%, say 20%. The agglomerated particle dries as a dark cluster, having a roasted and ground appearance whose center contains unagglomerated powder. The agglomerated product exhibits substantially higher volatile retention and improved product quality due to significantly lower recycle rates.

The apparatus and process of the present invention may also be utilized to agglomerate a mixture of two distinct soluble coffee products, such as coagglomerating a mixture of soluble coffee flakes and spray-dried soluble coffee powder (either milled or unmilled). In similar fashion, the apparatus and process may be utilized to darken a light-colored, granular, soluble coffee product (such as freeze-dried soluble coffee) with a minimal steam to coffee ratio, typically less than 0.1, preferably from 0.03 to 0.09 lbs. of steam to lbs. of coffee (0.03 to 0.09 kg of steam to 1 kg of coffee). When darkening granular soluble coffee products it is possible to achieve up to a 10 Lumetron colour unit darkening (i.e. from a light-colored freeze-dried coffee of 34° L units to a finished, darkened product of 24° L units). The darkening can be achieved with a minimal density increase within the range of from 10 to 25% depending upon the degree of darkening. The minimal increase in density results from the fact that there is only minimal steam penetration into the coffee product. In addition to the darkening and density increase, the process will improve the hardness value of the soluble coffee and it has the capability to remove substantially all of the fines.

## EXAMPLES

### Example #1

This example shall describe the production of a dark coffee agglomerate.

A spray-dried soluble coffee powder, having a bulk density of about 0.26 g/cc and a moisture of between 2.0-3.0% produced via conventional high viscosity spray drying is milled in a Fitzmill Model D grinder to an average particle size of 50 microns. The resulting milled powder has a density of between 0.5-0.6 g/cc. Milling may also be performed on a Micropul mill with a classifier. If desired, recycle can be mixed with the fresh coffee powder in a ribbon mixer before grinding.

The milled coffee powder is fed to the hopper of a rotary feed. The rotary feed is operated at a rate, typically 20-30 rpm, that yields a powder feed rate of 250-300 lbs/hr (113.4-136.1 kg/hr) to the motionless feed chute. Angled at 20 to 40 degrees from the horizontal, the feed chute allows the coffee powder to descend in a uniform curtain to the feed funnel. The funnel accepts the powder through a motionless 6-mesh (3.35 mm) screen and directs it through the 2½ inch x 12 inch (63.5 mm x 304.8 mm) agglomerator feed port and into the steaming zone. Steam enters the zone via two 2 ft. x 1.5 ft. (609.6 mm x 457.2 mm) steam distributors running parallel to the port and angled 15° from vertical. Perforated plate faceplates direct the steam into the steaming zone (agglomeration zone). Wet steam at 4-8 psig (129-159 kPa) is supplied to the distributors at a flow rate of less than 700 lb/hr (317.5 kg/hr).

The random coffee agglomerates formed from the steaming zone fall through the agglomerator to the tempering zone. Warm air of 140-150° F (60-65.6° C) is blown into the plenum air chamber surrounding the steaming zone at a flow rate of about 1900 ACFM (54 m³/min measured at 1 bar) in order to maintain a 0.01-.015 in. $H_2O$, (2.5-3.7 Pa) negative pressure at the feed port. About 47 ACFM (1.33 m³/min measured at 1 bar) of ambient air is drawn into the feed port, thus keeping the steam in the steaming zone. Air is exhausted from the 5 ft. x 1.5 ft. (1524 mm x 457 mm) high exhaust, located 4 ft. (1219 mm) from the agglomerator base, running parallel to the feed port at a constant rate of 3200 ACFM (91 m³/min measured at 1 bar). The exhaust airflows are balanced by bleeding ambient supplemental air into the exhaust hoods. The total volume of supplemental air is 980 ACFM (27.8 m³/min measured at 1 bar). Ambient air is drawn into the air break at a rate of 370 ACFM (10.5 m³/min measured at 1 bar). The balance of the inlet plenum air, supplemental air, and exhaust streams are sensed by Dwyer model #2304 magnehelic gauges. Condensation of steam on the agglomerator walls is prevented by recirculating 300 CFM (8.53 m³/min measured at 1 bar of 180°F (82.2°C) air through the 3 inch (76 mm) deep agglomerator shell.

The moist agglomerate, about 6.1% $H_2O$ falls upon the custom-made, 6ft. x 15 ft. long (1828 mm x 4572 mm long) white, neoprene belt conveyor and is conveyed from the agglomerator at a rate of between 120 to 160 ft/min (610 to 813 mm/sec). The thickness of the coffee layer on the belt is kept as low as possible to avoid clumping of agglomerates. At the end of the conveyor, the agglomerate falls through a stainless steel transition into a collection bin which is used to transfer moist agglomerates to the dryer feed hopper. A motorized brush beneath the belt is run at full speed to keep the belt free of coffee build-up.

Moist agglomerates are fed to the product dryer via an Eriez HS-50 vibratory feeder. The dryer used is a Jeffry TMV 2 ft. wide x 15 ft. long (610 mm wide x 4572 mm long), vibrating, fluid-bed dryer with three 2 ft. x 5 ft. (610 x 1624 mm) long sections and adjustable stroke lengths. A stroke length of 1/8 inch (3.2 mm) is used to yield a 2 minute residence time in the dryer. The first two sections of the dryer are each supplied with 1000 ACFM (28.4 m³/min measured at 1 bar) of 180-190°F (82.2-87.8°C) air for drying while the third section receives 1000 ACFM (28.4 m³/min measured at 1 bar) of 55-60°F (12.8-15.6°C) air for product cooling. The dried agglomerate, about 4.5-5.% $H_2O$, exits the dryer and is passed through an 18 inch (457 mm) diameter Sweco screener, model #LS18S3333, with the product collected being all agglomerate falling through an 8 U.S. mesh (2.36 mm) screen and resting on a 20 U.S. mesh (850 um) screen, although other screen sizes may be used. A product of about 0.23 g/cc density, 16.0°L color, and less than 10% fines results.

Example #2

This example shall describe the production of a co-agglomerate soluble coffee product, specifically an agglomerate produced from a mixture of milled spray-dried soluble coffee and soluble coffee flakes.

As in example #1 spray-dried soluble coffee powder is milled. The milled coffee powder is then mixed with coffee flakes, produced via a separate coffee process, at a ratio of 7 to 3 in a ribbon blender. The powder/flakes mixture is thus transferred to the hopper of the rotary feeder and agglomerated as in example #1. A product of about 0.23 g/cc density, 19.5°L color, 4.5% $H_2O$ and less than 10% fines resulted. The finished product exhibits a dark crystal-like, shiny appearance.

Example #3

This example describes the production of an agglomerated coffee product having a roast and ground appearance.

A spray-dried soluble coffee powder is milled as in example #1 with the exception that a mill with a classifier is recommended. The milled powder is transferred to the hopper of the rotary feeder and fed to the agglomerator at rates of 150-200 lb/hr (68.04-90.72 kg/hr). The motionless feed chute of example #1 is replaced by a 10 inch x 26 inch long (254 mm x 660 mm long) vibrating tray, powered by an Eriez HS-40-1 drive, with diverters to distribute the power across its entire width. As the powder falls from the discharge end of the tray it falls onto the two end-driven vibrating formation screens placed above the port. The screens are contained in custom-made, "U-box" size frames and are vibrated parallel to the port opening via Eriez HS-20 drives.

The vibration of the formation screens may be controlled via rheostats to obtain bridging. Distributor steam pressures of less than 5 psig (135 kPa) are used to provide gentle steaming. The other agglomeration, drying, and handling conditions are as in example #1. A product of about 0.28 g/cc density, 20.5°L color, and less than 10% fines results.

Example #4

This example describes the use of the present apparatus to darken a freeze-dried soluble coffee product.

Freeze-dried coffee particles of about 0.21 g/cc density, 3.7% $H_2O$, and 33°L color are fed to the hopper of a siletta vibratory feeder. The vibratory feeder is used to avoid damaging the particles. From the vibratory feeder the coffee is fed to the agglomerator inlet port at a rate of 800-1000 lb/hr (362.9-435.6 kg/hr). Corresponding amount of steam is approximately 40 to 45 lbs (18.1 to 20.41 kg) an hour yielding a steam to coffee ratio of approximately 0.05.

In the steaming zone the coffee particles are exposed to steam of less than 3 psig (122 kPa) pressure. A 0.015 in $H_2O$ (3.74 Pa) negative is maintained at the feed port. The agglomerator airflows and temperatures 18 are similar to those of example #1. The darkened freeze-dried particles are dried in the Jeffrey TMV 2 ft. x 15 ft. (610 mm x 4572 mm) long vibrating, fluid-bed dryer example #1 with slightly lower temperatures being used as in (170°F [76.7°C], 170°F [76.7°C], 50°F [10°C]). The resulting product is darkened to 25.5-26.5°L color, with a density and moisture of 0.26 g/cc and 3.8-3.9% respectively.

## Claims

1. A process for agglomeration of soluble coffee particles which comprises:
    (a) feeding a curtain of soluble coffee particles into an agglomerator between two separate steam distributors poised to intersect the particles as they descend therein;

    (b) contacting the particles with a fine spray of steam which intersects the particles causing wetting and fusion of coffee particles to form agglomerates;

    (c) passing the falling agglomerates to a tempering zone wherein the agglomerates are partially surface dried by a draft of laminar air which moves downward with said agglomerates, said laminar air being at a temperature of less than 200°F (93.3°C);

    (d) collecting the partially surface dried agglomerates on a moving continuous belt;

    (e) transferring the agglomerates to a drier; and

    (f) drying the agglomerates to a moisture content of 5% or less.

2. A process for darkening a light-coloured, granular soluble coffee product which comprises:
    (a) feeding a curtain of soluble coffee product into an agglomerator between two separate steam distributors poised to intersect the product as it descends therein;
    b) contacting the soluble coffee product with a fine spray of steam which intersects the product causing wetting of coffee product the contact of steam to coffee being maintained at a steam to coffee ratio of less than 0.1;

    c) passing the falling wetted product to a tempering zone where the wetted product is partially surfaced dried by a draft of laminar air which moves downward with said wetted product said laminar air being at a temperature of less than 200°F (93.3°C);

    (d) collecting the partially surface dried product on a moving continuous belt;

    (e) transferring the product to a drier;

    (f) drying the product to a moisture content of 5% or less.

3. A process according to Claim 2, wherein the charge of light colored, granular soluble coffee is freeze-dried soluble coffee.

4. A process of Claim 2 or Claim 3, wherein the steam to coffee ratio varies from 0.03 to 0.9.

5. A process according to any one of Claims 1 to 4, wherein a slight negative pressure is created relative to the atmosphere therearound at the point of descent of the particles to the agglomerator.

6. A process according to Claim 5, wherein the negative pressure is less than 0.04 inches of water (10 Pa).

7. A process according to any one of Claims 1 to 6, wherein the laminar air in the tempering zone is at temperature exceeding 125°F (51.7°C).

8. A process according to Claim 7, wherein the laminar air is between 140°-175°F (60°-79.4°C).

9. A process according to any one of Claims 1 to 8, wherein the steam distributors are planar and located at acute vertical angles to the horizontal.

10. A process according to Claim 9 wherein the planes of each of the steam distributors are at an angle of up to 30° from the vertical.

11. A process for according to Claim 9 or Claim 10, wherein the steam distributors are at an angle of about 15° from the vertical.

12. A process according to any one of Claims 1 to 11, wherein each of the steam distributors is comprised of a multiplicity of discrete tiny hole areas which spray the curtain of coffee particles.

13. A process according to Claim 12, wherein the tiny holes are arranged as a plurality of rows thereof and are adapted to direct steam inwardly and downwardly.

14. A process according to Claim 12 or Claim 13, wherein each of the small holes are less than 1/8 of an inch (3.2 mm).

15. A process according to any one of Claims 1 to 14, wherein the agglomerates are dried and cooled in a fluidized bed dryer in step (f).

16. A process according to any one of Claims 1 to 15, wherein the charge of soluble coffee particles is spray-dried powder that has been ground after spray-drying.

17. A process according to any one of Claims 1 to 16 wherein the agglomerate possesses a roast and ground appearance which process further comprises the steps of:

(a) milling spray-dried powder to an average particle size of from 25 to 75 microns, said powder forming the curtain of soluble coffee particles in step (a);

(b) prior to steam contact vibrating the milled spray-dried powder to form clusters which are passed through a screen; and

(c) fusing the outside surface of the cluster in step (b) while leaving the interior filled with dry powder.

18. A process according to Claim 17, wherein the spray-dried powder has added thereto coffee oil.

19. A process for agglomeration according to Claim 17 or Claim 18, wherein the spray dried powder has added thereto colloidal roast and ground coffee.

20. Apparatus for agglomerating soluble coffee particles comprising:

(a) means (42) for feeding a thin curtain of soluble coffee powder downwardly as a free-falling, thin curtain;

(b) an agglomerating zone (46) comprising a pair of steam distributors (66, 68), each having a plurality of discrete steam holes therein adapted to contact the curtain with steam sprays in downward and inward opposing directions;

(c) a tempering zone adapted to cause air at a temperature below 200° F (93.3° C) to flow laminarly downward around the moistened agglomerates;

(d) a conveyor belt (48) at the bottom of the tempering zone adapted to collect the moist agglomerates; and

(e) a separate drying zone (54) for drying the moist agglomerates thus recovered to a stable moisture content.

21. Apparatus according to Claim 20, wherein means are located at the upper extremity of the agglomerating zone creating a slight negative pressure relative to the point of descent of the powder into the agglomerating zone.

22. Apparatus according to Claim 20, wherein the negative pressure is less than 0.04 inches of water (10 Pa).

23. Apparatus according to any one of Claims 20 to 22, wherein the air in the tempering zone is at a temperature greater than 125° F (51.7° C).

24. Apparatus according to any one of Claims 20 to 23, wherein the air in the tempering zone is between 140° -175° F (60° -79.4° C).

25. Apparatus according to any one of Claims 20 to 24, wherein the steam distributors (66, 68) are planar and are equally spaced from the curtain of falling coffee are equally spaced from the curtain of falling coffee particles.

26. Apparatus according to any one of Claims 20 to 25, wherein the planes of each of said steam distributors (66, 68) is at an angle of up to 30° from the vertical.

27. Apparatus according to Claim 26, wherein the steam distributors are at an angle of about 15° from the vertical.

28. Apparatus according to any one of Claims 20 to 27, wherein the holes in the steam distributor have openings less than 1/8" (3.22 mm).

29. Apparatus according to any one of Claims 20 to 28, wherein the separate drying zone (54) is a fluidized bed dryer.

FIG. 1

FIG. 2

EP 0 420 509 A1

FIG. 3

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-1 513 730  (GENERAL FOODS)<br>* Example 1 * | 1,2,7,8,<br>12,13,16,<br>20,23,24,<br>28 | A 23 F 5/38<br>A 23 P 1/02 |
| Y | US-A-2 893 871  (H. GRIFFIN)<br>* Claims 1-3; columns 1-4; column 6, line 63 - column 7, line 40; column 10, line 51 - column 11, line 13; figures 1,2,3,4,6 * | 1,2,7,8,<br>12,13,16,<br>20,23,24,<br>28 | |
| A | US-A-3 716 373  (D. RHODES)<br>* Claims 1-4; columns 3-4 * | 1,17 | |
| D,A | US-A-4 594 258  (R. VITTI et al.)<br>* Claims 1-22; column 4 * | 16,17,18 | |
| D,A | US-A-4 594 257  (Y. LEBLANC)<br>* Claims 1-21 * | 16,17,19 | |
| A | RESEARCH DISCLOSURE, no. 113, September 1973, disclosure no. 11330; "Light colored agglomerates from spray-dried coffee powder"<br>* Whole article * | 4,20 | TECHNICAL FIELDS SEARCHED (Int. Cl.5)<br><br>A 23 F<br>A 23 P |
| D,A | EP-A-0 207 384  (SOC. DES PRODUITS NESTLE)<br>* Examples 1-5; page 11; figure 4 & US-A-4 640 839 & US-A-4 724 620 | 1,3,4,20,<br>25,29 | |
| A | US-A-3 767 419  (B. SIENKIEWICZ et al.) | | |
| A | CA-A-9 241 74  (GENERAL FOODS) | | |

The present search report has been drawn up for all claims

| Place of search | Date of completion of search | Examiner |
|---|---|---|
| The Hague | 08 January 91 | DESMEDT G.R.A. |